# EUROPEAN PATENT SPECIFICATION

(11) **EP 4 668 223 B1**
(45) Date of publication and mention of the grant of the patent: **22.07.2026**
(21) Application number: 24183548.7
(22) Date of filing: 20.06.2024
(51) Int. Cl.: G06V 10/25, G06V 20/69

(54) **A METHOD FOR IMAGE PROCESSING AND ELECTRONIC DEVICE**
VERFAHREN ZUR BILDVERARBEITUNG UND ELEKTRONISCHE VORRICHTUNG
PROCÉDÉ DE TRAITEMENT D'IMAGE ET DISPOSITIF ÉLECTRONIQUE

(43) Date of publication of application: 24.12.2025
(73) Proprietor: NG, Wai Kwan, Hong Kong (HK)
(72) Inventor: NG, Wai Kwan, Hong Kong (HK); LODATO, Ivano, Kowloon (HK); IYER, Aditya Varna, Kowloon (HK); TO, Isaac Zachary, Kowloon (HK); HIRANANDANI, Simran, Kowloon (HK); DUONG, Wang Tou Justin, Kowloon (HK)
(74) Representative: Isern Patentes y Marcas S.L.

(56) References cited:
- US-A1- 2018 143 179
- US-A1- 2021 181 085
- US-A1- 2023 221 239
- US-B2- 10 401 346
- KORRANAT NARUENATTHANASET ET AL: "Red Blood Cell Segmentation with Overlapping Cell Separation and Classification on Imbalanced Dataset", ARXIV.ORG, CORNELL UNIVERSITY LIBRARY, 201 OLIN LIBRARY CORNELL UNIVERSITY ITHACA, NY 14853, 2 December 2020 (2020-12-02), XP081826101

## Description

### Technical Field

The present application relates to the technical field of image processing, and in particular, relates to a method for image processing and an electronic device.

### Background of the Invention

Microscopic images of human blood samples obtained under medical observation equipment are widely used for the diagnosis of various diseases. For example, the diagnostic personnel can provide information of cell morphology and other parameters in microscopic images of blood sample..

Traditional analysis of these microscopic images is manually performed by diagnostic personnel. However, such manual operations are labor-intensive and prone to unexpected human errors.

With the continuous development of artificial intelligence, the analysis of microscopic images is gradually shifting towards automated computer-based approaches. Computers typically utilize deep neural network models trained on massive amounts of training data to perform operations such as image segmentation, image recognition, and image classification, providing analysis results as output.

However, deep neural network models require large training datasets to ensure accuracy of the analysis results, and overall computational efficiency is relatively low, resulting in high computational costs. US 2018/143179 A1 discloses a mobile sickle-cell diagnostic tool in which a handheld computing device (e.g., a smartphone) is operatively coupled to a microscope lens and one or more light sources to image a prepared blood smear on a slide. The captured image is processed by an image converter that performs noise reduction, including converting the image to monochrome and applying a Gaussian filter, followed by contour detection to identify object boundaries. An image analysis component then analyzes the detected contours to distinguish discrete red blood cells from clustered/overlapping cells and to classify cell shapes, identifying substantially round cells as normal and substantially elliptical/elongated cells as sickle cells

### Summary of the Invention

The invention is defined by the appended claims.

The method for image processing and electronic device according to the present application aim to address the drawbacks of low computational efficiency, high computational costs, and the need for large amounts of training data in existing deep neural network models.

In the first aspect, the present embodiment provides a method for image processing. The method includes: obtaining an original image; executing a predefined contour recognition algorithm with a given ideal cell radius value, to extract cell contours from the original image; according to the cell contours, cropping a plurality of cells from the original image; filling image holes, which is generated by the step of cropping a plurality of cells from the original image, with a predefined pixel value, to generated an filed image; converting the filled image into a corresponding binary image; according to the binary image, identifying a plurality of remaining cells in the filled image; classifying each cell in the original image.

In some embodiments, the step of executing a predefined contour recognition algorithm with a given ideal cell radius value, to extract cell contours from the original image further includes: executing a predefined neural network to obtain a pixel estimation result for the original image based on the ideal cell radius value; extracting a plurality of advanced features from the original image by a predefined machine learning method based on the pixel estimation results to generate feature maps with reduced spatial information; restoring the spatial information of the original image through transpose convolution and generating a segmentation map corresponding to the original image; wherein the segmentation map marks a foreground region and a background region in the original image, with the foreground region representing cell.

In some embodiments, the pixel estimation result includes: a probability of each pixel belonging to the foreground region and horizontal and vertical gradients of the pixel, and gradient vectors of all pixels within a cell point towards the center of the cell.

In some embodiments, the predefined pixel value is an average pixel value of the background region.

In some embodiments, the step of converting the filled original image into a corresponding binary image includes determining an ideal threshold value for binarization, converting the filled original image into the corresponding binary image, according to the threshold value.

In some embodiments, the step of determining the ideal threshold value includes: executing k-means clustering algorithm on the original image to obtain N clusters; wherein classification feature of the k-means clustering algorithm is pixel values; each cluster having a cluster center; taking a cluster center with minimum value, among the N cluster centers, as a target cluster center; comparing the target cluster center with the filled pixel value; when the filled pixel value is greater than the cluster result, determining the cluster result as the threshold value; when the filled pixel value is less than or equal to the cluster result, determining the filled pixel value as the threshold value.

Specifically, the value of N is 4.

In some embodiments, before the step of identifying the remaining cells in the filled image, the method further includes executing one or more preprocessing operations on the binary image; wherein the preprocessing operation comprises blur processing.

In some embodiments, the filled image is converted into a corresponding binary image through an OTSU operation of OpenCV, and the remaining cells in the filled image are identified through a findContour operation of OpenCV, based on the binary image.

In some embodiments, the step of cropping the cells from the original image includes finding a circle with minimum radius that enclosed each cell, according to the cell contours; and cropping the circle region from the original image to obtain the cell.

In some embodiments, the step of classifying each cell in the original image includes calculating at least one statistical feature of saturation value of the cell; when the statistical feature satisfies a predefined classification condition, taking the cell as a normal red blood cell; when the statistical feature does not satisfy a predefined classification condition, taking the cell as an abnormal red blood cell.

In some embodiments, the statistical feature includes mean or variance, and the classification conditions are determined by statistical features of known saturation values of normal and/or abnormal red blood cells.

In some embodiments, the method further includes displaying the number of red blood cells in the original image and calculating and displaying the proportion of abnormal red blood cells.

In some embodiments, the method further includes highlighting the abnormal red blood cells in the original image.

In the second aspect, the present embodiment provides an electronic device. The electronic device includes at least one processor and a memory communicatively connected to the processor; wherein the memory stores instructions executable by the at least one processor to perform the image processing method as described above.

At least one advantageous aspect of the method for image processing and electronic device according to the present application is that by introducing mathematical calculations in image segmentation that are not solely reliant on deep learning, the data requirements for training can be effectively reduced. Furthermore, by coordinating multiple segmentation steps, the computational efficiency is improved, and the computational costs are lowered.

### Brief Description of the Drawings

One or more embodiments are exemplarily described with reference to the accompanying drawings, which do not limit the embodiments. Elements with the same reference numerals in the drawings represent similar elements, unless otherwise specified. The drawings are not to scale.
FIG.1 is a flowchart illustrating the method for image processing according to an embodiment of present application.
FIG.2 is a flowchart illustrating the method for image processing according to another embodiment of present application.
FIG.3 is a schematic diagram illustrating the original image according to the embodiment of present application.
FIG.4 is a schematic diagram illustrating the cell contour of the original image according to the embodiment of present application.
FIG.5 is a schematic diagram illustrating the filed image according to the embodiment of present application.
FIG.6 is a schematic diagram illustrating the binary image according to the embodiment of present application.
FIG.7 is a schematic diagram illustrating the cell image cropped from the original image according to the embodiment of present application.
FIG.8 is a schematic diagram illustrating the electronic device according to the embodiment of present application.

### Detailed Description of the Embodiments

For a better understanding of the present invention, detailed explanations will be provided below in conjunction with the accompanying drawings and specific embodiments. It should be noted that when an element is described as "fixed to" another element, it can be directly on the other element, or there may be one or more intermediate elements between them. When an element is described as "connected" to another element, it can be directly connected to the other element, or there may be one or more intermediate elements between them. The terms "above," "below," "inside," "outside," "bottom," and the like used in this specification to indicate orientation or positional relationships are based on the orientation or positional relationships shown in the accompanying drawings, and are used for the convenience of describing the present invention and simplifying the description, and should not be understood as indicating or implying that the device or element referred to must have a specific orientation, be constructed or operated in a specific orientation, and should not be construed as limiting the present invention. In addition, the terms "first," "second," "third," and the like are used for descriptive purposes only and should not be construed as indicating or implying relative importance.

Unless otherwise defined, all technical and scientific terms used in this specification have the same meaning as commonly understood by those skilled in the art to which the present invention belongs. The terms used in this specification to describe specific embodiments are intended to serve the purpose of describing those specific embodiments and are not intended to limit the present invention. The term "and/or" used in this specification includes any and all combinations of one or more of the listed items.

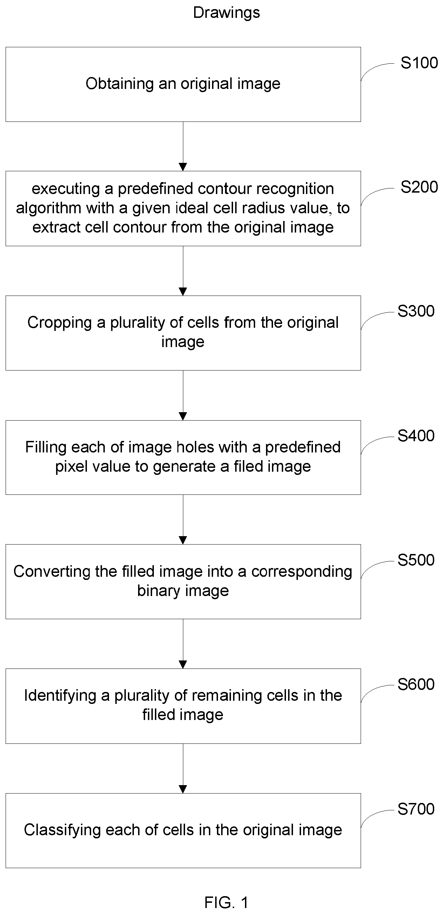

Fig.1 is a flowchart illustrating the method for image processing according to an embodiment. The image processing method may be applied to analyze a blood sample image obtained by a flow cytometer, to automatically determine the number of red blood cells and the proportion of abnormal red blood cells in the blood sample image. As shown in Fig.1, the method includes the following steps:
S100: Obtaining an original image.

The original image contains an image with several cells. It can be obtained by any suitable type of biological detection device and has an appropriate magnification to display the morphology, arrangement, and/or distribution of cells.

S200: executing a predefined contour recognition algorithm with a given ideal cell radius value, to extract cell contour from the original image.

The "cell contour" refers to the collection of edge pixels of cells in the original image. In other words, the cell contour is the boundary between the cell and the background region.

The "ideal cell radius value" is a parameter pre-set by the technician, which represents the typical cell size in the original image. It is an important variable for the contour recognition algorithm and has a significant impact on the output results of the contour recognition algorithm.

It can be understood that for different types of original images, due to differences in cell characteristics, different ideal cell radius values need to be set for the contour recognition algorithm to ensure good recognition performance.

In some embodiments, the step S200 may specifically include the following steps:

First, according to the ideal cell radius value, obtaining the pixel estimation results of the original image through a preset neural network. Specifically, the "pixel estimation results" refer to the probability that each pixel in the original image belongs to the foreground region and the horizontal and vertical gradients of the pixel. The gradient vectors of all pixels within a cell point to the center of the cell.

Then, according to the pixel estimation results, extracting advanced features from the original image through a preset machine learning method to generate a feature map with reduced spatial information.

The "spatial information" refers to the information contained in the relative positions and arrangements of different pixels in the original image. The "advanced features" refer to abstract representations extracted from the original image that can capture the semantics and important features in the image, including but not limited to texture or shape information.

Finally, based on the feature map, restoring the spatial information of the original image through transpose convolution to generate a segmentation map with the same size as the original image.

The transpose convolution is a reverse convolution operation that can expand the size of the feature map and restore the details and spatial structure of the original image.

The "segmentation map" with the same size as the original image uses two different labels or indices to mark the foreground region and the background region in the original image, thereby representing the segmentation result of the image. In this embodiment, the foreground region or region of interest in the original image is the cell, while the rest is the background region.

S300: according to the cell contour, cropping a plurality of cells from the original image.

"Crop" refers to cutting out the image region that belongs to the cells from the original image. Each cell identified in step 200 can be independently cropped for subsequent classification and analysis.

Specifically, the cropping operation can be based on a minimum bounding circle. First, a circle with a minimum radius that enclosed of a cell can be found (refer as "minimum bounding circle"), based on its contour. Then, the image region corresponding to the minimum bounding circle is cropped from the original image to obtain the cell image.

S400: filling each of image holes, which is generated by the step of cropping a plurality of cells from the original image, with a predefined pixel value, to generate a filed image.

"Fill" refers to filling all the holes in the original image with a specific pixel value to maintain the consistency of the original image size.

It should be understood that in this embodiment, the term "hole" is used metaphorically to describe the cropped regions, and it does not necessarily imply the presence of actual holes in the original image. In practical implementation, the specific pixel value can be directly applied to the corresponding region of the cell image after extraction to achieve the same effect.

Specifically, the average pixel value of the background region can be used as the fill pixel value to fill the holes generated in the original image, after the cropping operation.

S500: converting the filled image into a corresponding binary image.

"Binary image" refers to an image that contains only two pixel values, preserving the shape and contour information of the filled original image.

S600: identifying a plurality of remaining cells in the filled image.

Using the binary image that retains only shape and contour information, common image segmentation algorithms or similar models can be employed to identify and determine the cells that were not recognized in step S200.

S700: classifying each of cells in the original image.

Based on the cell images obtained in step S300 and the identified cell images from step S600, suitable classifiers or image classification models can be used to classify the cell images and determine their respective categories.

For example, in the context of auxiliary diagnosis of sickle cell anemia using the above image processing method, step S700 can specifically include the following: First, calculate at least one statistical feature of the saturation value of the cell image. Then, based on whether the statistical feature satisfies predetermined classification criteria, analyze and determine whether the cell belongs to normal red blood cells or abnormal red blood cells.

Statistical features are data characteristics calculated using specific mathematical statistical methods and can include, but are not limited to, mean and variance. The classification criteria can be determined based on known statistical results of the saturation values of normal and/or abnormal red blood cells.

In the embodiments, the statistical features of the saturation values are used as similarity metrics to determine whether the current cell image is similar to normal red blood cells or abnormal red blood cells.

In some embodiments, the specific steps of S500 can include the following steps:
Firstly, determining the optimal binary threshold for binary conversion. Then, converting the filed image into binary image, according to the optimal binary threshold.

The "binary threshold" is a benchmark that separates pixels into two categories: those with pixel values lower than or equal to the binary threshold, and those with values higher than the binary threshold.

Specifically, the binary threshold can be determined by following steps:
1) Use the pixel values as the classification feature and apply a predefined clustering algorithm to the original image to obtain N clusters.

The clustering algorithm can be an unsupervised learning algorithm such as K-means clustering. It iteratively assigns pixels in the original image into several clusters based on their pixel values, representing the prominent pixel colors in the image.

Each cluster has its corresponding cluster center, which is the average pixel value of all pixels in the cluster.

2) Take the minimum value among the N cluster centers as the target cluster center. The value of N can be a positive integer chosen based on the specific requirements of the application. For example, N can be set to 4.

3) Compare the predefined pixel value for filing operation with the target cluster center and choose the smaller value between the two. In other words, if the predefined pixel value is greater than the target cluster center, the target cluster center is determined as the binary threshold. If the predefined pixel value is less than or equal to the target cluster center, the predefined pixel value is determined as the binary threshold.

In some embodiments, before performing step S600, additional preprocessing can be applied to the converted binary image, such as blur processing, to improve the accuracy of the subsequent identification results.

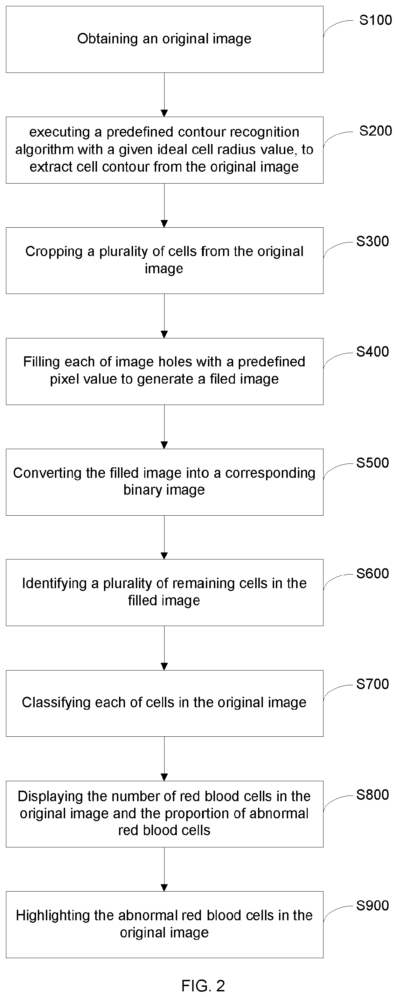

In some embodiments, based on the image segmentation and classification results, as shown in Fig.2, the image processing method can further include the following steps to enhance the user experience and facilitate the auxiliary diagnosis of diseases:
S800: displaying the number of red blood cells in the original image and calculate and the proportion of abnormal red blood cells.

The number of red blood cells can be determined based on the segmented image results and the total number of cell images obtained from the two identifications (i.e., step S300 and step S600). The proportion of abnormal red blood cells can be calculated accordingly. The display of the red blood cell count, and abnormal proportion can utilize any suitable visual information, without specific limitations.

S900: Highlight the abnormal red blood cells in the original image.

"Highlighting" refers to marking or emphasizing specific parts of the image. The specific method for highlighting can be determined, according to the requirements, as long as it attracts the attention of medical personnel, provides better visualization, and helps convey the desired information. For example, using color contrast to create a significant color difference between abnormal red blood cells and the surrounding area, or using graphical elements such as borders, arrows, and shadows to mark the abnormal red blood cells.

To fully describe the inventive concept of this application, I will provide a detailed explanation of the specific implementation process of the image processing method, as illustrated in the accompanying figures in the specification.

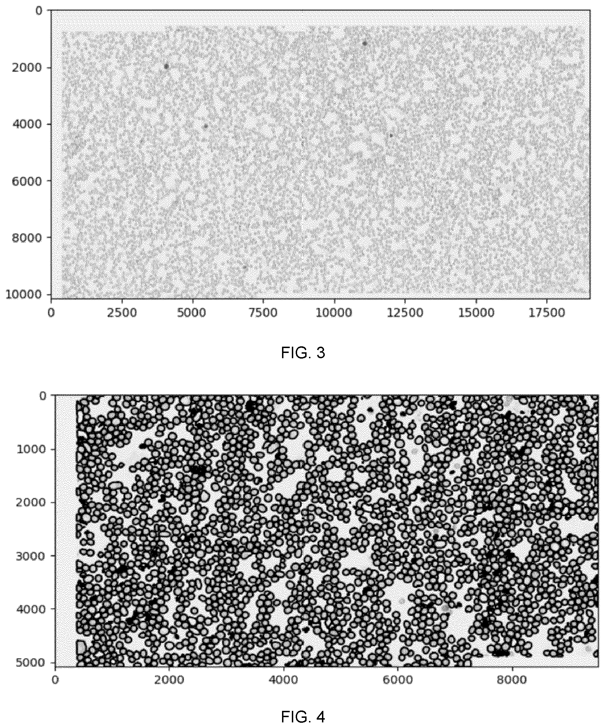

Firstly, the original image, as shown in Fig 3, is obtained or received. This original image contains multiple red blood cells.

During the first identification: The appropriate cell diameter value is determined for the original image, and the aforementioned contour identification algorithm is executed to accurately obtain the cell contours, as shown in Fig. 4. The contour identification algorithm is a deep learning-based general segmentation software that can overcome the problem of overlapping cells without requiring a large training dataset. It successfully segments cells of different shapes and sizes.

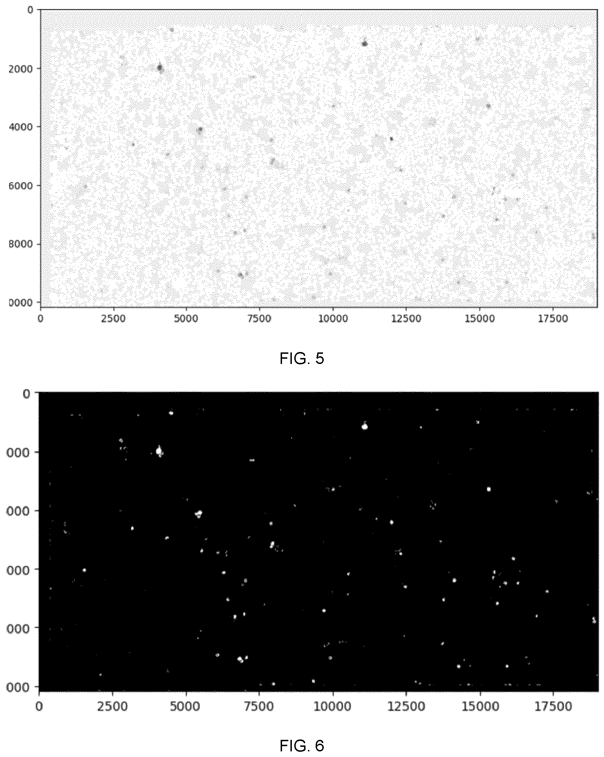

Next, as shown in Fig.5, the identified cells obtained from the contour identification algorithm are cropped from the original image using OpenCV, and these cells are filled with specific pixel values.

During the secondary identification, the filled original image is converted into a binary image using the OTSU operation in OpenCV, as shown in Fig. 6. Based on the binary image, the remaining cells in the original image are identified using the findcontour operation in OpenCV.

When determining the threshold for the OTSU operation, the k-means clustering algorithm is used to determine the four main colors in the original image. The darkest main color among the four main colors is compared with the lowest pixel value used during the filling process, and the smaller value is selected as the threshold for binary conversion.

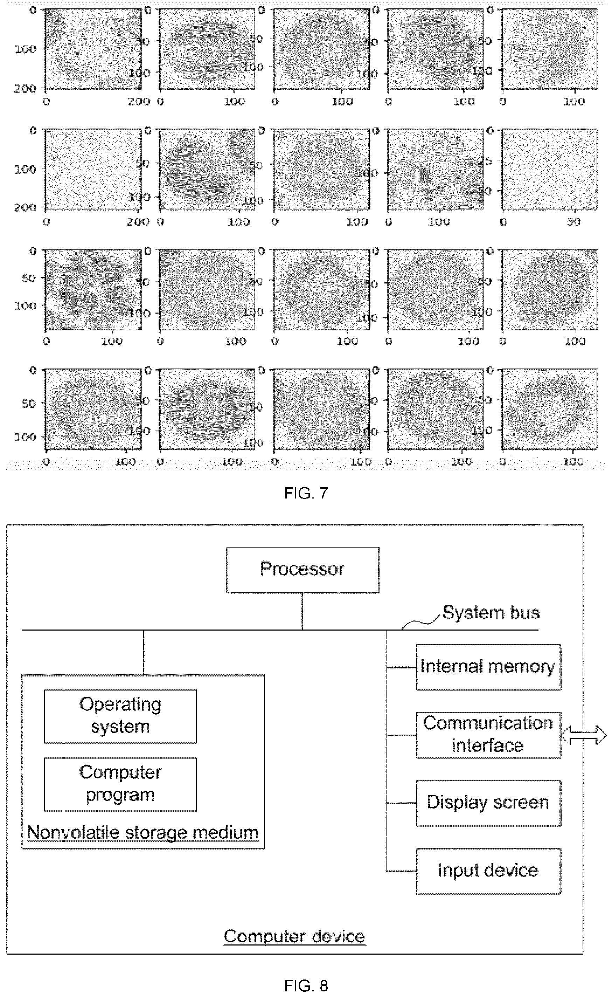

Lastly, for the identified cells as shown in Fig.7, a method based on saturation value and statistical features is used for classification to determine whether the cells are normal red blood cells or abnormal red blood cells.

It should be noted that the exemplary embodiments presented in this application provide a simplified and illustrative demonstration of the application of the image processing method in the auxiliary diagnosis of Mediterranean anemia. However, those skilled in the art can understand that based on similar principles, the image processing method provided in this application can also be applied to the auxiliary diagnosis of other similar diseases, such as malaria or leukemia.

Fig. 8 shows a schematic diagram of the structure of an electronic device according to the embodiment of the present application. As shown in Fig. 8, the computer device includes a processor, a memory, a communication interface, a display screen and an input device connected through a system bus. The processor of the computer device is used for providing computing and control capabilities. The memory of the computer device includes a nonvolatile storage medium and an internal memory. The nonvolatile storage medium stores an operating system and a computer program. The internal memory provides an environment for the operation of the operating system and the computer programs in the nonvolatile storage medium. The communication interface of the computer device is used for wired or wireless communication with external terminals, and the wireless communication may be realized by WIFI, operator network, Near Field Communication (NFC) or other technologies. The computer program, when executed by a processor, implements the method for image processing according to the embodiments described above. The display screen of the computer device may be a liquid crystal display screen or an electronic ink display screen, and the input device of the computer device may be a touch layer covered on the display screen, or a button, a trackball or a touchpad arranged on the shell of the computer device, or an externally connected keyboard, a touchpad or a mouse or the like.

As shall be appreciated by those skilled in the art, the structure shown in FIG. 8 is only a block diagram of a part of the structure related to the scheme of the present application, and it does not constitute a limitation on the computer device to which the scheme of the present application is applied, and a specific computer device may include more or less components than those shown in the figure, or include combinations of some components or different component arrangements.

In one embodiment, a computer-readable storage medium is provided on which a computer program is stored, and the computer program, when executed by a processor, implements the steps in the embodiments of the above-mentioned methods.

As shall be appreciated by those of ordinary skill in the art, all or part of the processes in the embodiments of the above-mentioned method may be realized by instructing related hardware through a computer program, the computer program may be stored in a nonvolatile computer-readable storage medium, and the computer program, when being executed, may include the processes in the embodiments of the above-mentioned methods. Any reference to memory, storage, database or other media used in the embodiments provided by the present application may include at least one of non-volatile and volatile memories. The non-volatile memory may include a Read-Only Memory (ROM), a magnetic tape, a floppy disk, a flash memory or an optical memory or the like. The volatile memory may include a Random Access Memory (RAM) or an external cache. By way of illustration but not limitation, RAM may be in various forms, such as a Static Random Access Memory (SRAM) or Dynamic Random Access Memory (DRAM) or the like.

The technical features of the above embodiments may be combined arbitrarily, and in order to make the description concise, not all possible combinations of the technical features in the above embodiments are described; however, the combinations of these technical features shall be considered as within the scope recorded in this specification as long as there is no contradiction therebetween.

Finally, it should be noted that the above embodiments are only used to illustrate the technical solutions of the present invention and are not intended to limit the scope thereof. Under the concept of the present invention, the technical features in the above embodiments or different embodiments can be combined, and the steps can be implemented in any order. Many other variations of the aspects of the present invention described above exist, but for the sake of brevity, they are not provided in detail.

## Claims

1. A method for image processing, comprising:
obtaining an original image;
executing a predefined contour recognition algorithm with a given ideal cell radius value, to extract cell contour from the original image, **characterized in that**:
according to the cell contour, cropping image regions corresponding to first cells from the original image;
filling each of image holes, which is generated by the step of cropping image region that belong to first cells from the original image, with a predefined pixel value, to generate a filled image;
converting the filled image into a corresponding binary image;
in the filled image, identifying, according to the binary image, second cells that were not recognized by the predefined contour recognition algorithm;
classifying each cell from the first cells and the second cells.

2. The method according to claim 1, wherein the step of executing a predefined contour recognition algorithm with a given ideal cell radius value, to extract cell contours from the original image comprises:
executing a predefined neural network to obtain a pixel estimation result for the original image based on the ideal cell radius value;
extracting a plurality of advanced features from the original image by a predefined machine learning method based on the pixel estimation results to generate a feature map with reduced spatial information;
restoring the spatial information of the original image through transpose convolution and
generating a segmentation map corresponding to the original image;
wherein the segmentation map marks a foreground region and a background region in the original image, with the foreground region representing cell.

3. The method according to claim 2, wherein the pixel estimation result comprises:
a probability of each pixel belonging to the foreground region and horizontal and vertical gradients of the pixel, and gradient vectors of all pixels within a cell point towards the center of the cell.

4. The method according to claim 2 or 3, wherein the predefined pixel value is an average pixel value of the background region.

5. The method according to any of claims 1 to 4, wherein the step of converting the filled original image into a corresponding binary image comprises:
determining an ideal threshold value for binarization;
converting the filled original image into the corresponding binary image, according to the threshold value.

6. The method according to claim 5, wherein the step of determining the ideal threshold value comprises:
executing k-means clustering algorithm on the original image to obtain N clusters; wherein
classification feature of the k-means clustering algorithm is pixel values; each cluster having a cluster center;
taking a cluster center with minimum value, among the N cluster centers, as a target cluster center;
comparing the target cluster center with the filled pixel value;
when the filled pixel value is greater than the cluster result, determining the cluster result as the threshold value;
when the filled pixel value is less than or equal to the cluster result, determining the filled pixel value as the threshold value.

7. The method according to claim 6, wherein the value of N is 4.

8. The method according to any of claims 1 to 7, wherein before the step of identifying the remaining cells in the filled image, the method further comprises:
executing one or more preprocessing operations on the binary image;
wherein the preprocessing operation comprises blur processing.

9. The method according to any of claims 1 to 8, wherein the filled image is converted into a corresponding binary image through an OTSU operation of OpenCV, and the remaining cells in the filled image are identified through a findContour operation of OpenCV, based on the binary image.

10. The method according to any of claims 1 to 9, wherein the step of cropping the cells from the original image comprises:
finding a circle with minimum radius that enclosed each cell, according to the cell contours;
cropping the circle region from the original image to obtain the cell.

11. The method according to any of claims 1 to 10, wherein the step of classifying each cell in the original image comprises:
calculating at least one statistical feature of saturation value of the cell;
when the statistical feature satisfies a predefined classification condition, taking the cell as a normal red blood cell;
when the statistical feature does not satisfy a predefined classification condition, taking the cell as an abnormal red blood cell.

12. The method according to claim 11, wherein the statistical feature comprises mean or variance, and the classification conditions are determined by statistical features of known saturation values of normal and/or abnormal red blood cells.

13. The method according to claim 11 or 12, wherein the method further comprises:
displaying the number of red blood cells in the original image;
calculating and displaying the proportion of abnormal red blood cells.

14. The method according to any of claims 11 to 13, wherein the method further comprises:
highlighting the abnormal red blood cells in the original image.

15. An electronic device, comprising
at least one processor, a memory communicatively connected to the processor; wherein the memory stores instructions executable by the at least one processor to perform the image processing method according to any of claims 1 to 14.

## Patentansprüche

1. Verfahren zur Bildverarbeitung, umfassend:
Erstellen eines Originalbildes;
Ausführen eines vordefinierten Konturerkennungsalgorithmus mit einem vorgegebenen idealen Zellradiuswert, um die Zellkontur aus dem Originalbild zu extrahieren, **dadurch gekennzeichnet, dass**:
entsprechend der Zellkontur den ersten Zellen entsprechende Bildbereiche aus dem Originalbild ausgeschnitten werden;
jede durch den Schritt des Ausschneidens der zu den ersten Zellen gehörenden Bildbereiche aus dem Originalbild entstandene Bildlücke mit einem vordefinierten Pixelwert gefüllt wird, um ein gefülltes Bild zu erzeugen; das gefüllte Bild in ein entsprechendes Binärbild umgewandelt wird;
im gefüllten Bild anhand des Binärbildes zweite Zellen identifiziert werden, die vom vordefinierten Konturerkennungsalgorithmus nicht erkannt wurden; jede Zelle der ersten Zellen und der zweiten Zellen klassifiziert wird.

2. Verfahren nach Anspruch 1, wobei der Schritt des Ausführens eines vordefinierten Konturerkennungsalgorithmus mit einem vorgegebenen idealen Zellradiuswert zum Extrahieren von Zellkonturen aus dem Originalbild Folgendes umfasst:
Ausführen eines vordefinierten neuronalen Netzes, um auf der Grundlage des idealen Zellradiuswerts ein Pixelschätzungsergebnis für das Originalbild zu erhalten;
Extrahieren einer Vielzahl erweiterter Merkmale aus dem Originalbild mittels eines vordefinierten maschinellen Lernverfahrens auf der Grundlage der Pixelschätzungsergebnisse, um eine Merkmalskarte mit reduzierten räumlichen Informationen zu erzeugen;
Wiederherstellen der räumlichen Informationen des Originalbildes durch transponierte Faltung und Erzeugung einer dem Originalbild entsprechenden Segmentierungskarte;
wobei die Segmentierungskarte einen Vordergrundbereich und einen Hintergrundbereich im Originalbild markiert, wobei der Vordergrundbereich eine Zelle darstellt.

3. Verfahren nach Anspruch 2, wobei das Ergebnis der Pixelschätzung Folgendes umfasst:
die Wahrscheinlichkeit, dass jedes Pixel zum Vordergrundbereich gehört, sowie die horizontalen und vertikalen Gradienten des Pixels, und die Gradientenvektoren aller Pixel innerhalb einer Zelle, die zum Mittelpunkt der Zelle zeigen.

4. Verfahren nach Anspruch 2 oder 3, wobei der vordefinierte Pixelwert ein durchschnittlicher Pixelwert des Hintergrundbereichs ist.

5. Verfahren nach einem der Ansprüche 1 bis 4, wobei der Schritt des Umwandelns des gefüllten Originalbildes in ein entsprechendes Binärbild Folgendes umfasst:
Bestimmen eines idealen Schwellenwerts für die Binarisierung;
Umwandeln des gefüllten Originalbilds in das entsprechende Binärbild gemäß dem Schwellenwert.

6. Verfahren nach Anspruch 5, wobei der Schritt der Bestimmung des idealen Schwellenwerts Folgendes umfasst:
Ausführen des k-Means-Clustering-Algorithmus am Originalbild, um N Cluster zu erhalten; wobei das Klassifizierungsmerkmal des k-Means-Clustering-Algorithmus Pixelwerte sind; jeder Cluster einen Clustermittelpunkt aufweist;
ein Clustermittelpunkt mit dem kleinsten Wert unter den N Clustermittelpunkten als Ziel-Clustermittelpunkt gewählt wird;
der Zielclustermittelpunkt mit dem Wert des gefüllten Pixels verglichen wird;
Bestimmen des Clusterergebnisses als Schwellenwert bestimmen, wenn der Wert des gefüllten Pixels größer als das Clusterergebnis;
Bestimmen des Werts des gefüllten Pixels als Schwellenwert, wenn der Wert des gefüllten Pixels kleiner oder gleich dem Clusterergebnis ist.

7. Verfahren nach Anspruch 6, wobei der Wert von N 4 beträgt.

8. Verfahren nach einem der Ansprüche 1 bis 7, wobei das Verfahren vor dem Schritt der Identifizierung der verbleibenden Zellen im gefüllten Bild ferner Folgendes umfasst:
Ausführen einer oder mehrerer Vorverarbeitungsoperationen am Binärbild;
wobei die Vorverarbeitungsoperation eine Unschärfeverarbeitung umfasst.

9. Verfahren nach einem der Ansprüche 1 bis 8, wobei das gefüllte Bild durch eine OTSU-Operation von OpenCV in ein entsprechendes Binärbild umgewandelt wird und die verbleibenden Zellen im gefüllten Bild auf Grundlage des Binärbildes durch eine Konturfindungsoperation von OpenCV identifiziert werden.

10. Verfahren nach einem der Ansprüche 1 bis 9, wobei der Schritt des Ausschneidens der Zellen aus dem Originalbild Folgendes umfasst:
Finden eines Kreises mit minimalem Radius, der jede Zelle entsprechend den Zellkonturen umschließt;
Ausschneiden des kreisförmigen Bereich aus dem Originalbild, um die Zelle zu erhalten.

11. Verfahren nach einem der Ansprüche 1 bis 10, wobei der Schritt der Klassifizierung jeder Zelle im Originalbild Folgendes umfasst:
Berechnen mindestens eines statistischen Merkmals des Sättigungswerts der Zelle;
Einstufen der Zelle als normales rotes Blutkörperchen, wenn das statistische Merkmal eine vordefinierte Klassifizierungsbedingung erfüllt;
Einstufen der Zelle als abnormales rotes Blutkörperchen, wenn das statistische Merkmal eine vordefinierte Klassifizierungsbedingung nicht erfüllt.

12. Verfahren nach Anspruch 11, wobei das statistische Merkmal den Mittelwert oder die Varianz umfasst und die Klassifizierungsbedingungen durch statistische Merkmale bekannter Sättigungswerte normaler und/oder abnormaler roter Blutkörperchen bestimmt werden.

13. Verfahren nach Anspruch 11 oder 12, wobei das Verfahren ferner Folgendes umfasst:
Anzeigen der Anzahl der roten Blutkörperchen im Originalbild;
Berechnen und Anzeige des Anteils abnormaler roter Blutkörperchen.

14. Verfahren nach einem der Ansprüche 11 bis 13, wobei das Verfahren ferner Folgendes umfasst:
Hervorheben der abnormalen roten Blutkörperchen im Originalbild.

15. Elektronische Vorrichtung, umfassend
mindestens einen Prozessor und einen zur Kommunikation mit dem Prozessor verbundenen Speicher; wobei der Speicher Anweisungen speichert, die von dem mindestens einen Prozessor zur Durchführung des Bildverarbeitungsverfahrens gemäß einem der Ansprüche 1 bis 14 ausgeführt werden können.

## Revendications

1. Procédé de traitement d'image, comprenant :
l'obtention d'une image originale ;
l'exécution d'un algorithme de reconnaissance de contours prédéfini avec une valeur donnée de rayon de cellule idéal, pour extraire le contour de cellule de l'image d'origine, **caractérisé en ce que** :
selon le contour de cellule, le découpage de régions d'image correspondant à des premières cellules de l'image d'origine ;
le remplissage de chaque trou d'image, qui est généré par l'étape consistant à découper la région d'image appartenant à des premières cellules de l'image d'origine, avec une valeur de pixel prédéfinie, pour générer une image remplie ; la conversion de l'image remplie en une image binaire correspondante ;
dans l'image remplie, l'identification, selon l'image binaire, de secondes cellules qui n'ont pas été reconnues par l'algorithme de reconnaissance de contours prédéfini ; la classification de chaque cellule parmi les premières cellules et les secondes cellules.

2. Procédé selon la revendication 1, dans lequel l'étape consistant à exécuter un algorithme de reconnaissance de contours prédéfini avec une valeur donnée de rayon de cellule idéal, pour extraire des contours de cellule de l'image d'origine comprend :
l'exécution d'un réseau neuronal prédéfini pour obtenir une estimation de pixel de l'image d'origine sur la base de la valeur de rayon de cellule idéal ;
l'extraction d'une pluralité de caractéristiques avancées à partir de l'image d'origine par un procédé d'apprentissage automatique prédéfinie sur la base des résultats d'estimation de pixel pour générer une carte de caractéristiques avec moins d'informations spatiales ;
la restauration des informations spatiales de l'image d'origine par le biais d'une convolution transposée et la génération d'une carte de segmentation correspondant à l'image d'origine ;
dans lequel la carte de segmentation délimite une région de premier plan et une région d'arrière-plan dans l'image d'origine, avec la région de premier plan représentant la cellule.

3. Procédé selon la revendication 2, dans lequel le résultat d'estimation de pixel comprend :
une probabilité que chaque pixel appartienne à la région de premier plan et à des gradients horizontaux et verticaux du pixel, et des vecteurs de gradient de tous les pixels au sein d'une cellule pointent vers le centre de la cellule.

4. Procédé selon la revendication 2 ou 3, dans lequel la valeur de pixel prédéfinie est une valeur de pixel moyenne de la région d'arrière-plan.

5. Procédé selon l'une quelconque des revendications 1 à 4, dans lequel l'étape consistant à convertir l'image originale remplie en une image binaire correspondante comprend :
la détermination d'une valeur seuil idéale pour la binarisation ;
la conversion de l'image originale remplie en l'image binaire correspondante, selon la valeur seuil.

6. Procédé selon la revendication 5, dans lequel l'étape consistant à déterminer la valeur seuil idéale comprend :
l'exécution d'un algorithme de partitionnement en k-moyennes à l'image d'origine pour obtenir N regroupements ;
dans lequel une caractéristique de classification de l'algorithme de partitionnement en k-moyennes est des valeurs de pixel ; chaque regroupement ayant un centre de regroupement ;
la considération d'un centre de regroupement avec une valeur minimale, parmi les centres de regroupement N, comme un centre de regroupement cible ;
la comparaison du centre de regroupement cible avec la valeur de pixel rempli ;
lorsque la valeur de pixel rempli est supérieure au résultat de regroupement, la détermination du résultat de regroupement comme la valeur seuil ;
lorsque la valeur de pixel rempli est inférieure ou égale au résultat de regroupement, la détermination de la valeur de pixel rempli comme la valeur seuil.

7. Procédé selon la revendication 6, dans lequel la valeur de N est 4.

8. Procédé selon l'une quelconque des revendications 1 à 7, dans lequel avant l'étape consistant à identifier les cellules restantes dans l'image remplie, le procédé comprend en outre :
l'exécution d'une ou plusieurs opérations de prétraitement sur l'image binaire ;
dans lequel l'opération de prétraitement comprend un traitement de flou.

9. Procédé selon l'une quelconque des revendications 1 à 8, dans lequel l'image remplie est convertie en une image binaire correspondante par le biais d'une opération OTSU d'OpenCV, et les cellules restantes de l'image remplie sont identifiées par le biais d'une opération findContour d'OpenCV, sur la base de l'image binaire.

10. Procédé selon l'une quelconque des revendications 1 à 9, dans lequel l'étape consistant à découper les cellules de l'image d'origine comprend :
la recherche d'un cercle avec un rayon minimal qui englobe chaque cellule, selon les contours de cellule ;
le découpage de la région de cercle de l'image d'origine pour obtenir la cellule.

11. Procédé selon l'une quelconque des revendications 1 à 10, dans lequel l'étape consistant à classer chaque cellule de l'image d'origine comprend :
le calcul d'au moins une caractéristique statistique de valeur de saturation de la cellule ;
lorsque la caractéristique statistique satisfait à une condition de classification prédéfinie, la considération de la cellule comme un globule rouge normal ;
lorsque la caractéristique statistique ne satisfait pas à une condition de classification prédéfinie, la considération de la cellule comme un globule rouge anormal.

12. Procédé selon la revendication 11, dans lequel la caractéristique statistique comprend la moyenne ou la variance, et les conditions de classification sont déterminées par des caractéristiques statistiques de valeurs de saturation connues de globules rouges normaux et/ou anormaux.

13. Procédé selon la revendication 11 ou 12, dans lequel le procédé comprend en outre :
l'affichage du nombre de globules rouges sur l'image d'origine ;
le calcul et l'affichage de la proportion de globules rouges anormaux.

14. Procédé selon l'une quelconque des revendications 11 à 13, dans lequel le procédé comprend en outre :
la mise en évidence des globules rouges anormaux sur l'image d'origine.

15. Appareil électronique, comprenant
au moins un processeur, une mémoire connectée en communication au processeur ; dans lequel la mémoire stocke des instructions pouvant être exécutées par l'au moins un processeur pour mettre en œuvre le procédé de traitement d'images selon l'une quelconque des revendications 1 à 14.
